# EUROPEAN PATENT APPLICATION

(11) **EP 3 335 852 A2**
(43) Date of publication of application: **20.06.2018**
(21) Application number: 17204539.5
(22) Date of filing: 29.11.2017
(51) Int. Cl.: B29C 45/14

(54) **METHOD OF EMBEDDING ELECTRONICS IN A PLASTIC VIA TRANSFERMOLDING FROM A POLYMER FILM**

(30) Priority: 14.12.2016 US 201615378644
(71) Applicant: Dura Operating, LLC, Auburn Hills, MI 48326 (US)
(72) Inventor: Stvartak, Christopher James, Waterford, MI 48327 (US); Sharron, Scott, Lasalle, Ontario N9J1A3 (CA)
(74) Representative: Bungartz Christophersen Partnerschaft mbB Patentanwälte

(57) **Abstract**

A method for in-mold transferring of electronics from a film includes creating an electronics layer including both active and passive components connected to conductive inks defining electrical traces and electrical contacts. At least one light source is electrically mounted on the conductive inks. A connector is mounted on the conductive inks using a conductive adhesive on the connector. A decorative film structure is connected to the electronics layer having a protective coating covering a graphics printed film. A carrier film is releasably coupled to the protective coating of the decorative film structure with a release agent. The decorative film structure and the electronics layer are placed into an injection mold. A polymeric material is injected into the injection mold encasing the decorative film structure and the electronics layer, with the polymeric material contacting a portion of the carrier film. The carrier film is then removed.

## Description

### FIELD

The present disclosure relates generally to the fabrication of plastic parts with electronic components, particularly backlit components, embedded in a molded plastic.

### BACKGROUND

The statements in this section merely provide background information related to the present disclosure and may or may not constitute prior art. Electronic assemblies with backlit visual elements may be manufactured via several processes. Most commonly, a plastic part is molded with some portion of the plastic being clear or translucent, with electronic components including one or more light sources attached mechanically to the part after molding, so that light is visible through the clear or translucent portion, resulting in a backlighting effect. More recently, methods have been developed of embedding one or more light sources in a molded plastic part. One such method is to encapsulate light sources and associated electronic components (collectively "package") in a clear resin via low-pressure molding and then to injection-mold plastic over or around the encapsulated package. The encapsulated package is thereby embedded in the plastic, with some portion of the plastic being clear or translucent so that light from the encapsulated package is visible through the clear or translucent plastic, resulting in a backlighting effect.

Another such method is to mount light sources and associated electronics ("package") onto a polymer film, form the film into a desired shape, insert the formed film into an injection mold having substantially the same shape, and then injection-mold plastic onto the film such that the package is embedded between the film on which it is mounted and the plastic that has been molded onto it, with portions of the film and/or plastic being clear or translucent such that light from the light sources is visible from the part exterior, resulting in a backlighting effect.

Electronic components may also be printed onto a film. The film is then inserted into an injection mold, where plastic is molded onto the film, the electronic components being embedded in the molded plastic so that when the plastic part is removed from the mold the film is peeled away from the plastic part, leaving the electronic components embedded in or adhered to the surface of the plastic part. Using the latter method, only passive electronic components such as components that receive or transmit a signal without human interaction, including antennae, without requiring a power source, have been incorporated into injection-molded parts. Conversely, active components including components that emit light, sound, or vibration, respond to touch, or otherwise require human interaction and require a power source are not known to have been incorporated into injection-molded parts by this method.

While methods for in-mold transferring of electronics from a film are known, such methods lack the placement of both active and passive components in the layers prior to performing an injection molding operation, chiefly because active components that detectably interact with a human observer are typically bulky, whereas passive components can typically be printed as a thin layer of conductive ink onto the film, which is relatively easy to handle and transfer from film without damaging the electronic function. This field can therefore benefit from the improved method for in-mold transferring of electronics from a film system of the present disclosure.

### SUMMARY

According to several aspects, a method for in-mold transferring of electronics from a film includes: bonding a decorative film structure to a carrier film; connecting an electronics layer to the decorative film structure, the electronics layer including components connected to conductive inks defining electrical traces and electrical contacts; electrically mounting at least one light source to the conductive inks; placing the film structure including electronic layer and light sources into an injection mold; and injecting a polymeric material into the mold encasing the decorative film structure and the electronics layer, with the polymeric material contacting a portion of the carrier film.

In one aspect, a release agent is positioned between the carrier film and the decorative film structure prior to the injecting step.

In another aspect, the carrier film is removed by use of the release agent after the polymeric material solidifies in the mold.

In another aspect, at least one light guide made of a light transmissive polymeric material is positioned over or adjacent to the at least one light source prior to the injection step.

In another aspect, a reflector is created having a through bore in the reflector.

In another aspect, the reflector is mounted to the light guide having a portion of the connector extending through the through bore in the reflector, providing access to the connector for electrical connection to a power source.

In another aspect, multiple partial cavities are created in the light guide sized to individually slidably receive one of the at least one light sources.

In another aspect, an adhesive layer is applied to the graphics printed film to receive components of the electronics layer.

In another aspect, a topcoat of a polymeric material protective coating is applied to the decorative film structure.

In another aspect, a connector is mounted on the conductive inks using a conductive adhesive on the connector.

In another aspect, a through bore is created in the light guide allowing a portion of the connector to pass entirely through the light guide.

In another aspect, the light guide is preformed as a substantially rigid body.

In another aspect, the light transmissive polymeric material for the light guide is applied as a liquid polymeric material onto the at least one light source.

According to further aspects, the at least one light source includes multiple light sources, and the light transmissive polymeric material is applied as a liquid polymeric material onto each one of the multiple light sources, thereby creating multiple ones of the at least one light guide.

According to further aspects, a method for in-mold transferring of electronics from a film includes creating an electronics layer including both active and passive components connected to conductive inks, or themselves comprised of conductive inks, defining electrical traces and electrical contacts. At least one light source is electrically mounted on the conductive inks. A connector is mounted on the conductive inks using a conductive adhesive on the connector. A decorative film structure is connected to the electronics layer having a protective coating covering a graphics printed film. A carrier film is releasably coupled to the protective coating of the decorative film structure with a release agent. The decorative film structure and the electronics layer are placed into an injection mold. A polymeric material is injected into the injection mold encasing the decorative film structure and the electronics layer, with the polymeric material contacting a portion of the carrier film.

In another aspect, the electronics layer and the decorative film structure are forced to conform to a contour of the injection mold as the injection mold is closed.

In another aspect, the electronics layer and the decorative film structure are forced to conform to a contour of the injection mold due to pressure applied via the injected polymeric material.

In another aspect, the carrier film is removed after injection molding leaving an area of the graphics printed film exposed; and the film transfer system is connected to a power source.

According to further aspects, a light guide made of a light transmissive polymeric material is applied onto the at least one light source prior to the placing step.

In another aspect, a liquid polymeric light transmissive polymeric material is applied onto the at least one light source to create a light guide prior to the placing step.

According to further aspects, a method for in-mold transferring of electronics from a film comprises: temporarily bonding a decorative film structure having a protective coating to a carrier film using a release agent between the protective coating and the carrier film; connecting an electronics layer to the decorative film structure having a graphics printed film, the electronics layer including both active and passive components connected to conductive inks defining electrical traces and electrical contacts; electrically mounting multiple light emitting diodes on the electronics layer; placing the carrier film into an injection mold; injecting a polymeric material into the injection mold encasing the decorative film structure and the electronics layer, with the polymeric material contacting a portion of the carrier film; and removing the carrier film after the polymeric material solidifies

Further aspects, examples, and advantages will become apparent by reference to the following description and appended drawings wherein like reference numbers refer to the same component, element or feature.

### DRAWINGS

The drawings described herein are for illustration purposes only and are not intended to limit the scope of the present disclosure in any way.
FIG. 1 is a cross sectional assembly view of a film transfer system of the present disclosure;
FIG. 2 is a cross sectional assembly view of another aspect of a film transfer system of the present disclosure;
FIG. 3 is a cross sectional assembly view of the film transfer system of FIG. 1 positioned in an injection mold, rotated 180 degrees with respect to FIG. 1;
FIG. 4 is a cross sectional side elevational view of the film transfer system of FIG. 3 after removal from the mold;
FIG. 5 is a cross sectional side elevational view of the film transfer system of FIG. 4 after removal of the carrier film; and
FIG. 6 is a cross sectional assembly view of the film transfer system similar to FIG. 3 positioned in a modified injection mold, rotated 180 degrees with respect to FIG. 1.

### DETAILED DESCRIPTION

The following description is merely exemplary in nature and is not intended to limit the present disclosure, application, or uses.

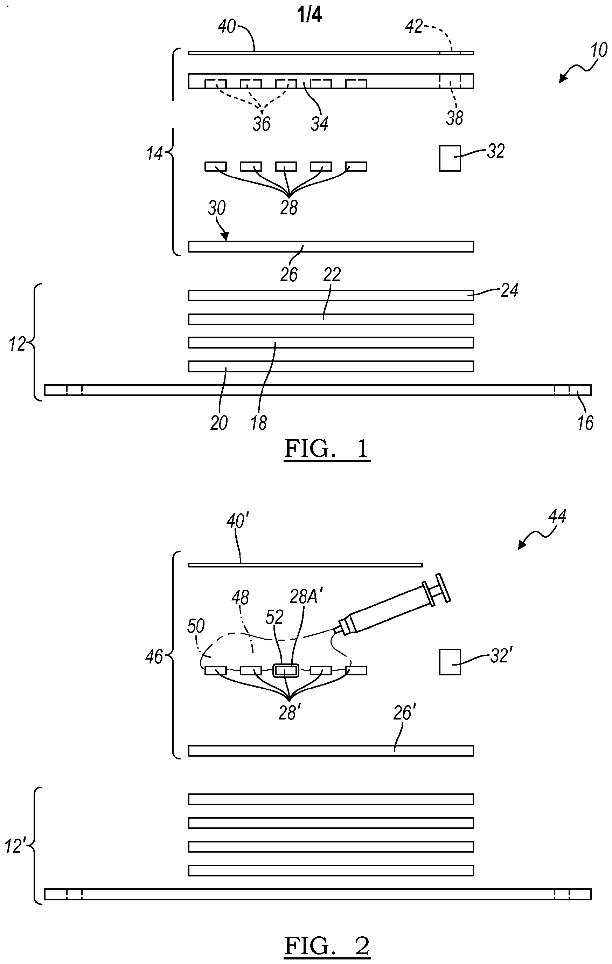

With reference to FIG. 1, a system and method for transferring in-mold electronics from a film layer is generally indicated with reference to a film transfer system 10. Film transfer system 10 provides a decorative film structure 12 which is connected to multiple active and passive components defining an electronics layer 14 in a mold such as an injection mold. The decorative film structure 12 includes a carrier film 16 connected to a "topcoat" of a polymeric material protective coating 18 using a release agent 20. The protective coating 18 covers and protects the graphics of a graphics printed film 22. An adhesive layer 24 applied to the graphics printed film 22 receives components of the electronics layer 14.

The electronics layer 14 includes conductive inks 26 defining for example electrical traces and electrical contacts. At least one and according to several aspects multiple light sources 28 such as light emitting diodes (LEDs) are mounted on the conductive inks 26 using a conductive adhesive on an underside of the LEDs. A connector 32 is also mounted on the conductive inks 26 using a conductive adhesive on an underside of the connector 32. A preformed light guide 34 made for example of a light transmissive polymeric material such as polymethyl methacrylate (PMMA) or polycarbonate (PC) is mounted to an opposite face of the light sources 28 using a nonconductive adhesive. To improve light transmission via the light guide 34, the light guide 34 includes multiple partial cavities 36 each sized to slidably receive one of the light sources 28. The light guide 34 further includes a through bore 38 allowing a portion of the connector 32 to pass entirely through the light guide 34. A reflector 40 is mounted to the light guide 34 using an adhesive which can be applied for example at corners of the light guide 34.

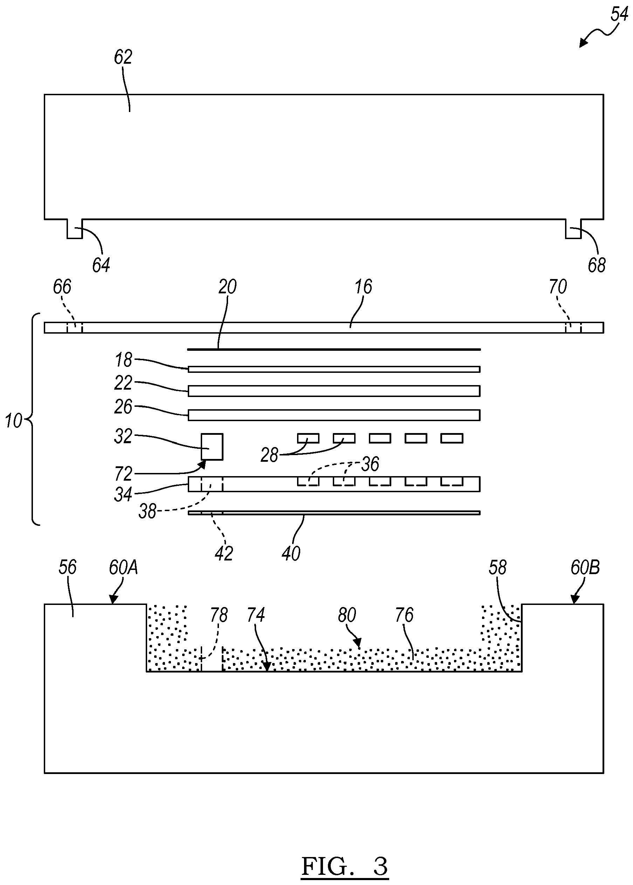

According to several aspects, the reflector 40 is made of a metal material and also includes a through bore 42 which allows a portion of the connector 32 to extend through and be accessible for electrical connection to a power source (not shown). After subsequent placement of the decorative film structure 12 and the electronics layer 14 into a mold, shown and described in reference to FIG. 3, a protective layer of a polymeric material is applied onto the film transfer system 10 and the carrier film 16 is removed by use of the release agent 20.

Referring to FIG. 2 and again to FIG. 1, according to several aspects, a film transfer system 44 is modified from the film transfer system 10, therefore components of the film transfer system 44 which are common to the film transfer system 10 are shown with an apostrophe and are substantially the same as the corresponding components of the film transfer system 10. The film transfer system 44 includes the decorative film structure 12' which is connected to multiple active and passive components defining an electronics layer 46 in a mold such as an injection mold. At least one and according to several aspects multiple light sources 28' such as light emitting diodes (LEDs) are mounted on the conductive inks 26' using a conductive adhesive on an underside of the LEDs. The connector 32' is also mounted on the conductive inks 26' using a conductive adhesive on an underside of the connector 32'.

In lieu of the unitary body or single light guide 34, either a single light guide 48 is created using a polymeric material such as an epoxy 50 applied in a substantially liquid form in place onto the multiple light sources 28', but does not contact or cover the connector 32'. The epoxy 50 is then cured such as by exposure to light such as ultraviolet light, heat or by air curing to a substantially solid form. According to further aspects, in lieu of applying the epoxy 50 to all of the light sources 28' collectively, the epoxy 50 can also be applied to each of the LEDs individually, thereby defining multiple separate or independent light guides such as a light guide 52 shown for the light source 28'a. After formation and curing of the epoxy 50 for the light guide 48 or the individual light guides such as the light guide 52, the reflector 40' is brought into contact with the light guide 48 or the individual light guides 52.

It is noted that the film transfer system 10 is flexible, allowing the film transfer system 10 to be placed into a mold defining a planar geometry, or a mold having curved or alternate geometries desired for a finished shape of the film transfer system 10. The active and passive components of the film transfer system 10 are protected by the various layers of the film transfer system 10 during a subsequent molding operation within an injection mold.

Referring to FIG. 3 and again to FIG. 1, according to several aspects, the various layers and components of the film transfer system 10 are placed into a mold 54 such as an injection mold. The mold 54 includes a first mold half 56 having a cavity 58 which is sized to receive all of the components of the film transfer system 10, except a portion of the carrier film 16 which overlaps onto a surface defined by surface portions 60a, 60b of the first mold half 56. A second mold half 62 is brought into contact with the carrier film 16. The second mold half 62 may include a first film locating pin 64 which is received in a preformed bore 66 of the carrier film 16, and a second film locating pin 68 which is received in a preformed bore 70 of the carrier film 16. The first and second film locating pins 64, 68 fix the location of the carrier film 16 as the molding operation takes place. According to further aspects, the first film locating pin 68 and the second film locating pin 68, as well as the preformed bores 66, 70 are omitted, and alternate means to temporarily hold the carrier film 16 in place can be used such as but not limited to a clamping mechanism, a vacuum, or an electrostatic charge. As previously noted, the connector 32 extends through the through bore 42 of the carrier film 16 and contacts the second mold half 62 as polymeric material is injected into the mold 54.

An end face or surface 72 of the connector 32 directly contacts a face 74 of the first mold half 56 within the cavity 58. A polymeric material 76 such as an ABS plastic is injected into the cavity 58 except at a portion 78 occupied by the connector 32. A surface 80 of the polymeric material 76 directly contacts the reflector 40 and the edges of the various layers and components of the film transfer system 10 up to the and including the carrier film 16.

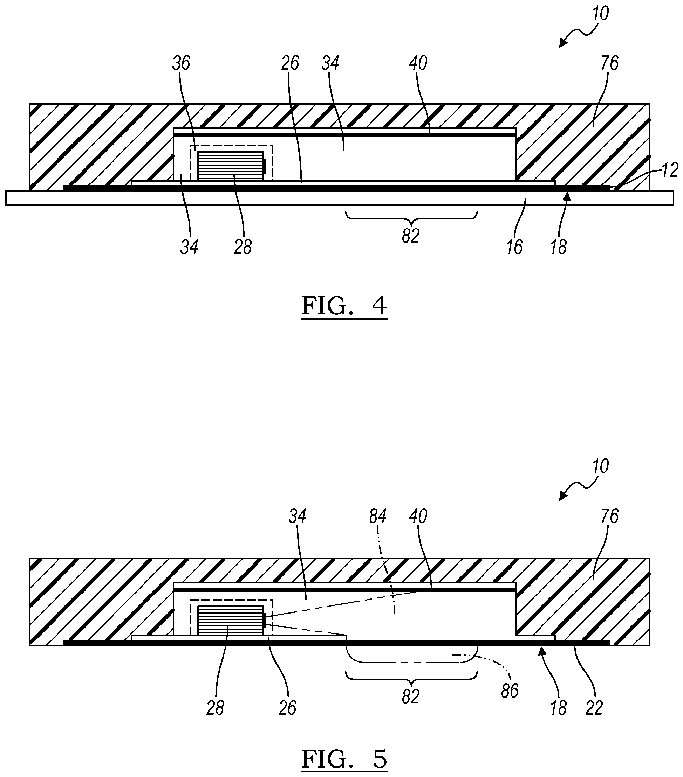

Referring to FIG. 4 and again to FIG. 3, the light guide 34 prevents contact of the polymeric material 76 with an area 82 of the graphics printed film 22 while the film transfer system 10 is in the mold 54. After the polymeric material 76 substantially solidifies in the mold, the film transfer system 10 with the polymeric material 76 defines a substantially rigid component. After the polymeric material 76 cools and solidifies, the film transfer system 10 is removed from the mold 54 and still includes the carrier film 16. The reflector 40 and therefore the light guide 34 and the light sources 28 are enclosed and protected by the polymeric material 76.

Referring to FIG. 5 and again to FIGS. 3 through 4, after the film transfer system 10 is removed from the mold 54, the carrier film 16 is removed, leaving the area 82 of the graphics printed film 22 exposed. The film transfer system 10 with the rigid polymeric material 76 layer is connected to a power source at the connector 32. Light beams 84 generated during subsequent operation of the light sources 28 and reflected within the light guide 34 exit via the area 82. A light zone 86 is therefore visible to a user, the light zone 86 constituting the backlighting effect previously discussed herein.

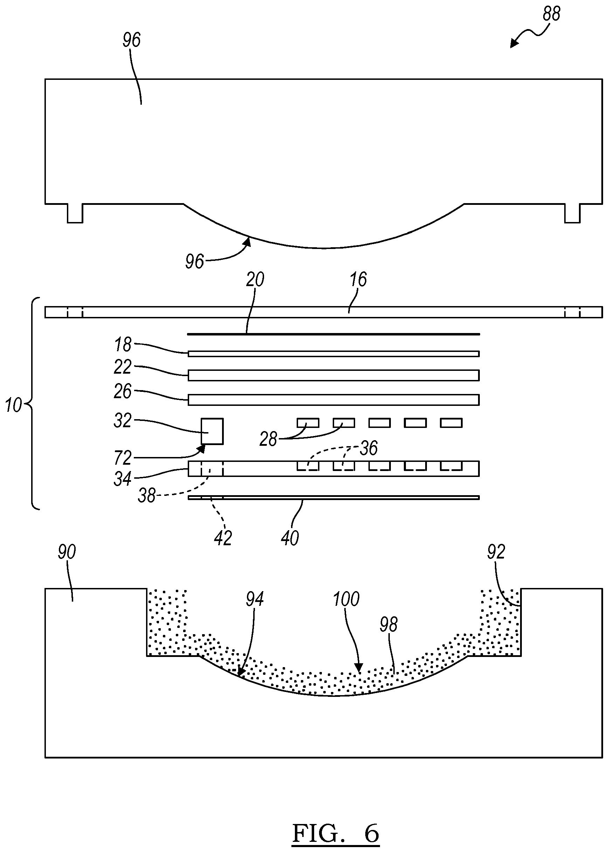

Referring to FIG. 6 and again to FIGS. 1 through 3, according to several aspects, the various layers and components of the film transfer system 10 can alternately be placed into a curved surface mold 88 such as an injection mold. The mold 88 differs from the mold 54 in that the mold 88 includes a first mold half 90 having a cavity 92 which is sized to receive all of the components of the film transfer system 10, except that the first mold half 90 also includes a concave curved surface 94. A second mold half 96 is brought into contact with the carrier film 16. The second mold half 96 includes a convex curved surface 96 which corresponds to a curvature of the concave curved surface 94. The curved surface 94 defining a concave shaped surface and the curved surface 96 defining a convex shaped surface can be reversed, or other geometric shapes can be used in place of the curved surfaces 94, 96. The intent of the curved surfaces 94, 96 is to force the layers of the film transfer system 10 to conform to a non-linear geometry. The non-linear geometry can be predetermined to match a desired geometry of a component the film transfer system 10 is used in, such that after injection molding of a polymeric material 98 the film transfer system 10 defines a non-linear shape.

When the second mold half 96 is brought into contact with the carrier film 16, the layers of the film transfer system 10 deflect to conform to the geometry of the curved surfaces 94, 96 forcing the electronics layer and the decorative film structure to conform to a contour of the injection mold as the injection mold is closed. Alternately, the electronics layer and the decorative film structure can be forced to conform to a contour of the injection mold due to a pressure of the injected polymeric material. A polymeric material 98 similar to the polymeric material 76 is injected into the mold 88, and a surface 100 of the polymeric material 98 directly contacts the reflector 40 and the edges of the various layers and components of the film transfer system 10 up to the and including the carrier film 16.

According to several aspects, the embedding of both active and passive electronic components inside an injection-molded plastic part is performed by first printing or mounting the electronic components onto a flexible polymer film (conductive inks 26 mounted onto the carrier film 16). The conductive inks 26 and the carrier film 16 are together fed into a mold, and then a plastic material such as acrylonitrile butadiene styrene (ABS) is injection-molded onto a face of the conductive inks 26, 16 where the electronic components were printed or mounted. The printed electronic components are then released from the carrier film 16, so that, when the mold opens, the carrier film 16 separates from the surface of the molded plastic part, and the electronic components remain embedded inside the molded plastic part.

According to several aspects, a method of embedding electronic components in plastic is provided. The plastic such as ABS is injection-molded around the electronic components inside an injection mold. The electronic components carried on a polymer film, including the conductive inks 26 and carrier film 16, inserted into the injection mold. The electronic components include but are not limited to: capacitive-touch sensors printed onto the conductive inks 26 with a suitable material such as silver-filled conductive ink or poly(3,4-ethylenedioxythiophene) polystyrene sulfonate (PEDOT:PSS). Electrical leads are printed onto the conductive inks 26 with any suitable material such as silver-filled conductive ink. Antennae can be printed in contact with the conductive inks 26 with any suitable material, or the antennae can themselves comprise conductive ink material. Light-emitting diodes are attached to the film with any suitable material such as a silver-filled conductive adhesive. One or more light guides are formed or added. Dielectric layers are printed providing electrical insulation of the various conductive materials from one another. One or more electrical connectors are bonded to the conductive inks 26 with a silver-filled conductive adhesive. One or more coatings are then formed that serve to protect the electronic components from air, moisture, heat, pressure, or other environmental or manufacturing conditions.

The carrier film 16 is printed with graphical elements that are transferred onto the molded plastic part and are visible on its surface after molding. The carrier film 16 is coated with a material, the release agent 20, that promotes separation of the electronic components or graphical elements from the carrier film 16 during or after injection-molding. The carrier film 16 is coated with a material that is transferred to the injection-molded plastic part and serves to protect any exposed electronic components or graphical elements on the surface of the finished part from abrasion, fingerprints, UV radiation, or other elements that may tend to damage or degrade the part surface. Any necessary control circuits or power sources are either embedded in the injection-molded plastic or are attached externally in communication with the embedded active electronic components via connector 32.

According to several aspects, the term *"passive"* as used herein refers to electronic components that have no inherent function requiring a control circuit or power source; a chief example being an antenna. The term *"active"* as used herein refers to electronic components that have inherent functions requiring human interaction, such as emitting light, sound, or vibration, or creating a capacitance in response to touch, which require a control circuit and/or power source in order to function.

According to several aspects, a method for in-mold transferring of electronics from a film of the present disclosure improves upon known designs by (1) eliminating one or more post-molding assembly steps and (2) reducing a thickness of the finished part, reducing weight, and thus improving design flexibility. The method for in-mold transferring of electronics from a film of the present disclosure also improves upon known processes by eliminating an intermediate forming step to form the plastic film to a contour matching a contour provided in an injection mold. To accomplish this, the method for in-mold transferring of electronics from a film method prints or mounts the electronic components onto a polymer film that is sufficiently thin to allow it to conform to the contours of the injection mold solely due to the pressure of the injection-molded plastic, without an intermediate or preliminary forming step.

The description of the present disclosure is merely exemplary in nature and variations that do not depart from the gist of the present disclosure are intended to be within the scope of the present disclosure. Such variations are not to be regarded as a departure from the spirit and scope of the present disclosure.

## Claims

1. A method for in-mold transferring of electronics from a film, comprising:
bonding a decorative film structure (12, 12') to a carrier film (16);
connecting an electronics layer (14, 46) to the decorative film structure (12, 12'), the electronics layer (14, 46) including components connected to conductive inks (26) defining electrical traces and electrical contacts;
electrically mounting at least one light source (28, 28') to the conductive inks (26);
placing the carrier film (16) into a mold; and
injecting a polymeric material into the mold encasing the decorative film structure (12, 12') and the electronics layer (14, 46), with the polymeric material contacting a portion of the carrier film (16).

2. The method for in-mold transferring of electronics from a film of claim 1, further including positioning a release agent (20) between the carrier film (16) and the decorative film structure (12, 12') prior to the injecting step.

3. The method for in-mold transferring of electronics from a film of claim 2, further including removing the carrier film (16) by use of the release agent (20) after the polymeric material solidifies in the mold.

4. The method for in-mold transferring of electronics from a film of one of the preceding claims, further including positioning at least one light guide (34, 48, 52) made of a light transmissive polymeric material over or adjacent to the at least one light source (28, 28') prior to the injecting step.

5. The method for in-mold transferring of electronics from a film of one of the preceding claims, further including mounting a connector (32) on the conductive inks (26) using a conductive adhesive on the connector (32).

6. The method for in-mold transferring of electronics from a film of claim 5, further including creating a through bore (38) in the light guide (34) allowing a portion of the connector (32) to pass entirely through the light guide (34).

7. The method for in-mold transferring of electronics from a film of one of the preceding claims, further including creating a reflector (40) having a through bore (42) in the reflector (40) and preferably mounting the reflector (40) to the light guide (34) having a portion of the connector (32) extending through the through bore (42) in the reflector (40) providing access to the connector (32) for electrical connection to a power source.

8. The method for in-mold transferring of electronics from a film of one of the claims 4 to 7, further including creating partial cavities (36) in the light guide (34) sized to individually slidably receive one of the at least one light sources (28, 28').

9. The method for in-mold transferring of electronics from a film of one of the preceding claims, further including applying an adhesive layer (24) to the decorative film structure (12, 12') to receive components of the electronics layer (14, 46), and/or including applying a topcoat of a polymeric material protective coating (18) to the decorative film structure (12, 12').

10. The method for in-mold transferring of electronics from a film of one of the claims 4 to 9, further including preforming the light guide (34) as a substantially rigid body.and/or applying the light transmissive polymeric material for the light guide (52) as a liquid onto the at least one light source (28, 28').

11. The method for in-mold transferring of electronics from a film of one of the preceding claims 4 to 10, wherein the at least one light source (28, 28') includes multiple light sources (28, 28'), and further including individually applying the light transmissive polymeric material as a liquid onto each one of the multiple light sources (28, 28'), thereby creating multiple ones of the at least one light guide (34).

12. A method for in-mold transferring of electronics from a film, comprising:
creating an electronics layer (14, 46) including both active and passive components connected to conductive inks (26) defining electrical traces and electrical contacts;
electrically mounting at least one light source (28, 28') on the conductive inks (26);
mounting a connector (32) on the conductive inks (26) using a conductive adhesive on the connector (32);
connecting a decorative film structure (12, 12') to the electronics layer (14, 46) having a protective coating covering a graphics printed film (22);
releasably coupling a carrier film (16) to the protective coating of the decorative film structure (12, 12') with a release agent (20);
placing the decorative film structure (12, 12') and the electronics layer (14, 46) into an injection mold; and
injecting a polymeric material into the injection mold encasing the decorative film structure (12, 12') and the electronics layer (14, 46), with the polymeric material contacting a portion of the carrier film (16).

13. The method for in-mold transferring of electronics from a film of claim 12, further including forcing the electronics layer (14, 46) and the decorative film structure (12, 12') to conform to a contour of the injection mold as the injection mold is closed, .preferably due to a pressure of the injected polymeric material.

14. The method for in-mold transferring of electronics from a film of one of the claims 12 or 13, further including:
removing the carrier film (16) leaving an area of the graphics printed film (22) exposed; and
connecting the film transfer system (10) to a power source.

15. A method for in-mold transferring of electronics from a film, comprising:
temporarily bonding a decorative film structure (12, 12') having a protective coating to a carrier film (16) using a release agent (20) between the protective coating and the carrier film (16);
connecting an electronics layer (14, 46) to the decorative film structure (12, 12') having a graphics printed film (22), the electronics layer (14, 46) including both active and passive components connected to conductive inks (26) defining electrical traces and electrical contacts;
electrically mounting multiple light emitting diodes on the electronics layer (14, 46);
placing the carrier film (16) into an injection mold;
injecting a polymeric material into the injection mold encasing the decorative film structure (12, 12') and the electronics layer (14, 46), with the polymeric material contacting a portion of the carrier film (16); and
removing the carrier film (16) after the polymeric material solidifies.
